## Europäisches Patentamt
## European Patent Office
## Office européen des brevets

(19)

(11) Veröffentlichungsnummer: **0 095 659**
**B1**

(12)

# EUROPÄISCHE PATENTSCHRIFT

(45) Veröffentlichungstag der Patentschrift:
**15.01.86**

(51) Int. Cl.⁴: **B 23 Q 16/02**

(21) Anmeldenummer: **83104908.5**

(22) Anmeldetag: **18.05.83**

(54) Teilapparat.

(30) Priorität: **27.05.82 DE 3220026**

(43) Veröffentlichungstag der Anmeldung:
**07.12.83 Patentblatt 83/49**

(45) Bekanntmachung des Hinweises auf die Patenterteilung:
**15.01.86 Patentblatt 86/3**

(84) Benannte Vertragsstaaten:
**CH FR GB IT LI**

(56) Entgegenhaltungen:
**EP-A-0 055 784**
**EP-A-0 064 741**
**DE-A-3 118 141**
**DE-A-3 151 613**
**GB-A-1 536 938**

(73) Patentinhaber: **MAHO WERKZEUGMASCHINENBAU BABEL & CO.,**
**Postfach 1280, D-8962 Pfronten/Allgäu (DE)**

(72) Erfinder: **Babel, Werner, Achweg 19, D-8962 Pfronten- Meilingen (DE)**

(74) Vertreter: **Patentanwälte Beetz sen. - Beetz jun. Timpe - Siegfried - Schmitt- Fumian,**
**Steinsdorfstrasse 10, D-8000 München 22 (DE)**

LIBER, STOCKHOLM 1986

**Beschreibung**

Die Erfindung betrifft einen Teilapparat für eine NC-gesteuerte Fräsmaschine, bestehend aus einem auf dem Werkstücktisch aufspannbaren Gehäuse, einer im Gehäuse drehbar gelagerten Spindel zur Aufnahme eines Werkstück-Spanners und aus einer Klemmung zum Fixieren der verschiedenen Teilungsstellungen der Spindel.

Teilapparate sind Zubehör-Geräte für insbesondere Universal-Fräsmaschinen, die ein Verdrehen der eingespannten Werkstücke in bestimmte Teilungsstellungen und damit die Werkstück-Bearbeitung in einer zusätzlichen Achse ermöglichen. Teilapparate sind in verschiedenen Ausführungen bekannt, und zwar zum direkten Teilen mittels einer Teilscheibe, zum indirekten Teilen über einen gesonderten Antriebsmotor und ein Schneckengetriebe sowie zum Differtialteilen. Zum direkten Teilen unter Verwendung der Teilscheibe sind eine Reihe von manuellen Arbeitsgängen notwendig, so daß ein vollautomatischer Ablauf und eine Integration in die Programmsteuerung der Fräsmaschine nicht möglich ist. Teilapparate mit Schneckentrieb und Teilscheibe zum indirekten Teilen können zwar in die Programmsteuerung der Fräsmaschine einbezogen werden, sie sind jedoch wegen des zusätzlichen Antriebsmotors und des Schneckengetriebes technisch aufwendig und damit teuer.

Aufgabe der Erfindung ist es, einen Teilapparat für NC-gesteuerte Fräsmaschinen zu schaffen, der bei einfachem konstruktiven Aufbau und ohne eigenen Antrieb einen programmgesteuerten Ablauf der Teilungsbewegungen der Werkstücke ermöglicht.

Diese Aufgabe wird durch die Merkmale des Patentanspruchs gelöst, d.h daß die Spindel des Teilapparates mit einem an einem Bauteil der Fräsmaschine befestigten Mitnehmer kuppelbar und durch programmgesteuerte Bewegungen der Fräsmaschine antreibbar ist.

Der erfindungsgemäße Teilapparat ist insbesondere für kleinere und einfache NC-gesteuerte Fräsmaschinen konzipiert, bei denen nur in Einzelfällen die Notwendigkeit besteht, Bearbeitungen von Werkstücken in einer zusätzlichen Achse vorzunehmen. Wenn drehfeste Arbeitstische verwendet werden, wird der Teilapparat so auf dem Arbeitstisch aufgespannt, daß seine Längsachse parallel zur Längsachse des Spindelstockes verläuft. Für jeden Teilvorgang wird der Arbeitstisch zusammen mit dem aufgespannten Teilkopf und dem Tisch-Schlitten am Ständer so weit vertikal verfahren, bis der am Spindelstock, zweckmäßig im Spannfutter der Arbeitsspindel, befestigte Mitnehmer mit der Spindel des Teilapparates gekuppelt werden kann. Durch eine gleichzeitige kombinierte Bewegung des Arbeitstisch-Schlittens am Ständer in der Vertikalachse und des Arbeitstisches gegenüber dem Schlitten in der Horizontalachse führt der Teilapparat nach Lösen der Klemmung der Teil-Spindel eine Kreisbewegung in einem vorgegebenen Winkelbereich aus, die eine entsprechend große Verdrehung der Teil-Spindel und des darin eingespannten Werkstückes zur Folge hat.

Ein grundsätzlich gleicher Bewegungsablauf läßt sich bei Verwendung eines Drehtisches erzielen, wobei in diesem Fall der Teilapparat in beliebigen Winkel-Positionen auf dem Drehtisch aufgespannt werden kann. Zu Beginn jedes Teilungsvorganges ist es jedoch notwendig, daß der Drehtisch um seine Vertikalachse in eine Stellung gedreht wird, in der die Längsachse der Teil-Spindel achsparallel zur Längsachse des Spindelstockes der Fräsmaschine verläuft. Sobald der Drehtisch diese Stellung erreicht hat, erfolgt die Vertikalbewegung des Werkstücktisch-Schlittens gegenüber dem Ständer, um den Mitnehmer mit der Teil-Spindel zu kuppeln. Nach Lösen der Klemmung der Teil-Spindel erfolgt dann die Teilungsbewegung durch die kombinierte Kreisbewegung des Arbeitstisches. Nach erfolgter Teilung und erneuter Klemmung der Teil-Spindel wird die Kupplung z. B. durch Zurückfahren des Spindelstockes gelöst und der im Futter der Arbeitsspindel eingespannte Mitnehmer kann auf übliche Weise automatisch gegen ein Bearbeitungswerkzeug ausgewechselt werden.

Durch die erfindungsgemäße Ausbildung des Teilapparates ergibt sich der wesentliche Vorteil, daß ein Werkstück in fünf Achsen bearbeitet werden kann, wobei der Teilapparat nur aus einer geringen Anzahl von Einzelteilen besteht, nämlich lediglich der Spindel mit ihren Lagern im Gehäuse, der Klemmvorrichtung und einem mit der Spindel drehfest verbundenen Kupplungsglied, das zweckmäßigerweise aus einer Scheibe bestehen kann, die eine Aufnahme für den Mitnehmer aufweist. Von besonderer, Bedeutung ist dabei, daß ein gesonderter Antrieb mit Getriebe nicht benötigt wird, da die Teil-Spindel durch die Bewegungen des Arbeitstisches, des Vertikalschlittens und/oder des Spindelstockes angetrieben wird.

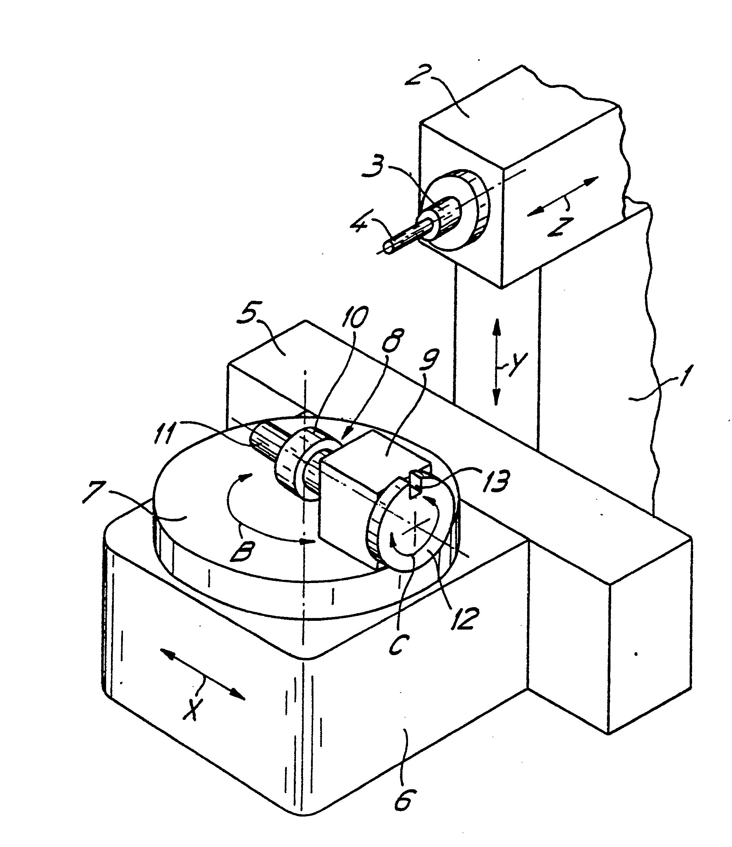

Im folgenden wird ein Ausführungsbeispiel der Erfindung anhand der Zeichnung im einzelnen beschrieben, in welcher die wesentlichen Teile einer Fräsmaschine zusammen mit dem erfindungsgemäßen Teilapparat perspektivisch dargestellt sind.

Die Fräsmaschine besteht aus einem Ständer 1, auf dessen oberer horizontalen Fläche ein Spindelstock 2 in Richtung einer Z-Achse mittels nicht dargestellter Antriebe und Führungen verfahrbar angeordnet ist. In der im Spindelstock 2 gelagerten Horizontalspindel 3 ist ein Mitnehmer-Dorn 4 eingespannt, welcher einen Mitnehmer darstellt. An der stirnseitigen Vertikalfläche des Ständers 1 ist ein Schlitten 5 in Richtung der Achse Y vertikal verfahrbar angeordnet. Dieser Schlitten 5 weist Führungen für einen Arbeitstisch 6 auf, der an der Schlittenvorderseite in Richtung der X-Achse mittels nicht dargestellter Antriebe verfahrbar angeordnet ist. Auf der Tischoberfläche befindet sich ein Drehtisch 7, der um eine Vertikalachse B drehen kann. Auf der Arbeitsfläche dieses Drehtisches 7 ist ein erfindungsgemäß ausgebildeter Teilapparat 8 aufgespannt. In einem Gehäuse 9 dieses Teilapparates ist eine Teil-Spindel 10 drehbar gelagert, die Spanneinrichtungen 11 zur Aufnahme von - nicht dargestellten - Werkstücken besitzt. Diese Teil-Spindel 10 ist um eine horizontale Achse C im Gehäuse 9 drehbar gelagert und wird in den vorgegebenen Teilungsstellungen durch nicht dargestellte Klemmvorrichtungen festgelegt. Die Teil-Spindel 10 ist mit einer Scheibe 12 drehfest verbunden, die sich bei der dargestellten Ausführung vor der vorderen Stirnfläche des Gehäuses 9 befindet. Diese Scheibe 12 weist an ihrem Außenrand eine Ausnehmung 13 in Form eines Loches oder Schlitzes auf, in die während des Teilvorganges der Mitnehmer-Dorn 4 eingreift.

Bei der dargestellten Ausführung läuft ein Teilungsvorgang wie folgt ab:

Der nicht dargestellte Drehtisch-Antrieb wird gestartet und verdreht den Tisch 7 in eine Stellung, in welcher die Achse C des Teilapparates 8 parallel zur Achse Z des Spindelstockes 2 verläuft. Anschließend oder auch gleichzeitig mit der Drehbewegung wird der Arbeitstisch 6 in Richtung der X-Achse so verfahren, daß sich der Schlitz 13 vertikal genau unter dem Mitnehmer-Dorn 4 befindet. Die Winkellage der geklemmten Scheibe 12 und damit die jeweilige Position des Schlitzes 13 ist in der Programm-Steuerung enthalten. Der Spindelstock 2 fährt in Richtung der Z-Achse zurück und der Schlitten 5 fährt so weit nach aufwärts, bis sich der Schlitz 13 genau vor dem Dorn 4 befindet. Daraufhin fährt der Spindelstock 2 so weit nach vorn, bis der Dorn 4 in den Schlitz 13 eingreift. Nach Lösen der Klemmung der Teil-Spindel 10 erfolgt eine kombinierte Bewegung des Schlittens 5 in der vertikalen Y-Richtung und des Arbeitstisches 6 in der horizontalen X-Richtung. Durch diese kombinierte Bewegung führt der Teilapparat eine Kreisbewegung aus, die eine Verdrehung der Teil-Spindel 10 um die Achse C in dem vorgegebenen Teilungs-Winkel zur Folge hat. Nach Ablauf dieser Verdrehbewegung der Teil-Spindel 10 wird die Klemmung wiederum betätigt und der Spindelstock 2 fährt zurück, wodurch der Mitnehmer-Dorn 4 aus dem Schlitz 13 der Scheibe 12 freikommt und diese Kupplungs-Verbindung damit gelöst ist. Der Schlitten 5, der Arbeitstisch 6 und der Drehtisch 7 fahren daraufhin in die vorgegebene Arbeitsposition zurück, in welcher die Bearbeitung des Werkstückes nach automatischem Wechsel des Mitnehmer-Dorns 4 gegen ein Bearbeitungswerkzeug wieder aufgenommen werden kann.

Der beschriebene Teilapparat ist für solche Anwender besonders geeignet, bei denen nur von Zeit zu Zeit Werkstücke in einer fünften Achse bearbeitet werden müssen. Für diese Anwender bietet die Erfindung den Vorzug, daß auch die Teilvorgänge programmgesteuert ablaufen können, ohne daß jedoch höhere Investitionskosten für die für diesen Zweck bisher üblichen Teilapparate mit gesondertem Antrieb und Schneckengetriebe anfallen.

Die Erfindung ist im Rahmen des Patentaspruches nicht auf die dargestellte und vorstehend beschriebene Ausführung beschränkt. So ist es beispielsweise möglich, den Mitnehmer-Dorn auch an einem Vertikal-Fräskopf vorzusehen und statt der schlitzförmigen Ausnehmung 13 in der Scheibe 12 ein anderes Kupplungselement, wie beispielsweise einen Kugelzapfen, vorzusehen, der von dem ggf. zangenförmigen Mitnehmer-Dorn ergriffen werden kann. Ferner besteht auch die Möglichkeit, die Scheibe 12 mit einem äußeren Zahnkranz zu versehen, der mit einer auf der Oberfläche des Schlittens befestigten Zahnstange in Eingriff gelangt.

## Patenanspruch

Teilapparat für eine NC-gesteuerte Fräsmaschine, bestehend aus einem auf dem in zwei Koordinatenachsen motorisch verfahrbaren Tisch (6, 7) der Fräsmaschine aufspannbaren Gehäuse (9), aus einer feststellbaren Teilspindel (10) zur Aufnahme eines Werkstück-Spanners, die in diesem Gehäuse (9) um eine zur Tisch-Oberfläche parallele Achse drehbar gelagert ist, aus einer Klemmung zum Fixieren der Teilspindel (10) in den verschiedenen Teilungsstellungen und aus einer mit der Teilspindel verbundenen Scheibe (12) mit Ausnehmungen (13) für einen Dorn (4),

dadurch gekennzeichnet,

daß ein in die Werkzeugaufnahme der Arbeitsspindel (3) eingespannter Dorn (4) nach Eingriff in die Ausnehmung (13) der am freien Ende der Teilspindel (10) befestigten Scheibe (12) das Treibglied zur Verdrehung der Teilspindel (10) durch programmgesteuerte Bewegungen der Fräsmaschine bildet.

## Claim

Dividing attachment for a numerically controlled milling machine, comprising a housing (9) adapted to be mounted on the table (6, 7) of the milling machine, said table being motor-driven for movement along two coordinate axes, a lock-type dividing spindle (10) for receiving a workpiece chucking device, said dividing spindle being mounted within said housing (9) for rotation about an axis extending in parallel to the table surface, clamping means for fixing the dividing spindle (10) in the various dividing positions, and a disk (12) connected to the dividing spindle and having cut-outs for an arbor (4),

characterised in

that an arbor (4) clamped in the tool holding fixture of the work spindle (3), after engagement with the cut-out (13) of the disk (12) mounted on the free end of the dividing spindle (10), constitutes the driving member for rotating the dividing spindle (10) through programme-controlled movements of the milling machine.

**Revendication**

Diviseur pour une fraiseuse à commande numérique, constitué d'un boîtier (9) pouvant être bridé sur la table (6, 7) de la fraiseuse qui est déplaçable par moteur suivant deux axes de coordonnées, d'une broche de division immobilisable (10) destinée à recevoir une fixation pour pièce à usiner et qui est montée rotative dans ce boîtier(9) autour d'un axe parallèle à la surface supérieure de la table, d'une fixation pour immobiliser la broche de division (10) dans les différentes positions de division, et d'un plateau (12) relié à la broche de division et muni de logements (13) pour un mandrin (4),
<u>caractérisé en ce que</u>
un mandrin serré dans la fixation de pièce à usiner de la broche de travail (3) constitue, après engagement dans le logement (13) du plateau (12) fixé à l'extrémité libre de la broche de division (10), l'organe d'entraînement servant à la rotation de la broche de division (10) grâce à des déplacements à commande programme de la fraiseuse.